# EUROPÄISCHE PATENTSCHRIFT

(11) **EP 1 964 752 B1**
(45) Veröffentlichungstag und Bekanntmachung des Hinweises auf die Patenterteilung: **24.02.2010**
(21) Anmeldenummer: 08000926.9
(22) Anmeldetag: 18.01.2008
(51) Int. Cl.: B62D 5/00, B62D 15/02

(54) **Verfahren zum Ausrichten eines Lenkwinkelgebers für eine elektrische Lenkung eines Flurförderzeuges sowie ein Flurförderzeug**
Method for adjusting the steering angle transmitter of the electrical steering for an industrial truck and an industrial truck
Procédé d'alignement d'un capteur d'angle de direction pour une direction électrique d'un chariot de manutention et chariot de manutention

(30) Priorität: 27.02.2007 DE 102007009465
(43) Veröffentlichungstag der Anmeldung: 03.09.2008
(73) Patentinhaber: Jungheinrich Aktiengesellschaft, 22047 Hamburg (DE)
(72) Erfinder: Steiner, Michael, Dipl.-Ing., 22965 Todendorf (DE)
(74) Vertreter: Hauck Patent- und Rechtsanwälte

(56) Entgegenhaltungen:
- EP-A- 1 238 891
- EP-A- 1 310 419

## Beschreibung

Die vorliegende Erfindung betrifft ein Verfahren zum Ausrichten eines Lenkwinkelgebers für eine elektrische Lenkung eines Flurförderzeugs sowie ein Flurförderzeug.

Bei der Verwendung einer elektrischen Lenkung für Flurförderzeuge kann es erforderlich sein, die Position von Lenkwinkelgeber und gelenktem Rad aufeinander abzustimmen. Die Abstimmung ist für die elektrische Lenkung beim Wiedereinschalten erforderlich, wenn beim abgeschalteten Fahrzeug der Lenkwinkelgeber oder das gelenkte Rad gedreht werden konnten. Da diese Bewegung im abgeschalteten Zustand des Fahrzeugs von Sensoren an der Lenkung nicht erfasst werden kann, geht beim Wiedereinschalten des Fahrzeugs die Lenksteuerung davon aus, daß noch die Positionen vorliegen, die beim Ausschalten vorgelegen haben. Sieht die elektrische Lenkung eine absolute Zuordnung zwischen der Stellung des Lenkwinkelgebers und dem gelenkten Rad vor, beispielsweise weil ab einer vorbestimmten Auslenkung des gelenkten Rades eine Begrenzung des Lenkwinkelgebers erfolgt, so ist eine erneute Ausrichtung erforderlich.

Ein Verfahren zur Ausrichtung eines Lenkwinkelgebers ist aus DE 101 55 441 A1 bekannt. Das Verfahren betrifft eine elektrische Lenkung, bei der ein Sensor die Winkelstellung des Lenkwinkelgebers und ein anderer Sensor die aktuelle Ausrichtung des gelenkten Rades erfaßt, um in einer Ausrichtphase die Positionen von Lenkwinkelgeber und Lenkrad aufeinander abzustimmen. In der bekannten Ausrichtphase erfolgt eine Bewegung des Lenkwinkelgebers, ohne daß eine Bewegung der gelenkten Räder erfolgt. Ist die gesuchte Position für den Lenkwinkelgeber erreicht, so erfolgt nachfolgend wieder eine Ansteuerung des gelenkten Rades.

Aus EP 1 238 891 A1 ist ein Lenkwinkelsensor bekannt, der eine mit dem Lenkwinkelgeber gekoppelte mechanische Zähleinheit zur Zählung der vollen Umdrehung des Lenkrads bzw. der Lenksäule gegenüber einer Nulllage aufweist.

Auch ist es im Stand der Technik bekannt, ein Getriebe mit einem Übersetzungsverhältnis von beispielsweise 5:1 zwischen dem Lenkwinkelgeber und einem Sollwertsensor zur Erfassung der Lenkwinkelposition vorzusehen. Hierdurch können Situationen auftreten, bei denen in der Ausrichtphase der Lenkwinkelgeber mehrere Volldrehungen beschreiben muß, um wieder mit dem gelenkten Rad ausgerichtet zu werden.

Der Erfindung liegt die Aufgabe zugrunde, die Ausrichtphase für eine elektrische Lenksteuerung eines Flurförderzeugs mit einfachen Mitteln zu verbessern und dabei den vom gelenkten Rad zurückgelegten Weg bei der Ausrichtung zu minimieren.

Die erfindungsgemäße Aufgabe wird durch ein Verfahren mit den Merkmalen aus Anspruch 1 gelöst, ebenso durch ein Flurförderzeug mit den Merkmalen gemäß Anspruch 8.

Das erfindungsgemäße Verfahren dient zur Ausrichtung eines Lenkwinkelgebers für eine elektrische Lenkung eines Flurförderzeugs. Das Flurförderzeug ist mit einem Sollwertsensor ausgestattet, der die Stellung des Lenkwinkelgebers erfaßt. Bevorzugt erfaßt der Sollwertsensor die Stellung des Lenkwinkelgebers in einem Bereich von 0° bis 360°. Ferner ist ein Istwertsensor vorgesehen, der die Winkelausrichtung eines gelenkten Rades erfaßt. Besitzt das Flurförderzeug mehrere gelenkte Räder, so erfaßt der Istwertsensor die Winkel der gelenkten Räder oder einen die Ausrichtung der Räder darstellenden Winkel. Auch ist eine Lenksteuerung vorgesehen, die ein Übersetzungsverhältnis zwischen Lenkwinkelgeber und gelenktem Rad festlegt. Das Übersetzungsverhältnis gibt vor, um welchen Winkel das gelenkte Rad gedreht wird, wenn der Lenkwinkelgeber um einen Winkel verdreht wird. Das Übersetzungsverhältnis kann dabei abhängig von sonstigen Zustandsparametern des Flurförderzeugs variieren. Die Lenksteuerung unterteilt den Winkelbereich, den das gelenkte Rad überstreichen kann, in Winkelsegmente, wobei ein Winkelsegment einer Volldrehung des Lenkwinkelgebers entspricht. Die Winkelsegmente werden nachfolgend auch kurz als Segmente bezeichnet. Bei dem erfindungsgemäßen Verfahren wird in einer Ausrichtphase der vom Istwinkelsensor erfaßten Ausrichtung des gelenkten Rads ein Segmentwert und ein Winkelwert innerhalb des Segments zugeordnet. Das gelenkte Rad wird dann innerhalb seines Segments in eine Winkelausrichtung gedreht, die der vom Sollwertsensor erfaßten Lage des Lenkwinkelgebers entspricht. Das erfindungsgemäße Verfahren bietet den Vorteil, daß, das gelenkte Rad lediglich innerhalb seines Segments ausgerichtet wird. Selbst wenn im ausgeschalteten Zustand des Flurförderzeugs der Lenkwinkelgeber eine oder mehrere Volldrehungen um 360° erfährt, wird nicht die gesamte Winkeländerung durch das gelenkte Rad beim Ausrichten nachvollzogen. Im Stand der Technik ist es dagegen so, daß das gelenkte Rad die gesamte Änderung des Lenkwinkelgebers, auch über seine Segmentgrenzen hinaus, beim Ausrichten nachvollziehen muß.

Das erfindungsgemäße Verfahren vermeidet somit eine zu starke Beanspruchung der gelenkten Räder und verkürzt darüber hinaus die Zeitdauer für das Ausrichten der Lenkung bei einem Start des Flurförderzeugs.

In einer bevorzugten Weiterführung des erfindungsgemäßen Verfahrens ist das Übersetzungsverhältnis derart bestimmt, daß der gesamte Winkelbereich, den das gelenkte Rad überstreichen kann, mit einer vorbestimmten Anzahl von Volldrehungen des Lenkwinkelgebers überstrichen wird. Das Übersetzungsverhältnis ist bevorzugt so gewählt, daß eine ganzzahlige Anzahl von Volldrehungen des Lenkwinkelgebers den gesamten Winkelbereich des gelenkten Rades überstreicht.

In einer weiteren Ausgestaltung des erfindungsgemäßen Verfahrens ist eine zuschaltbare Bremse für den Lenkwinkelgeber vorgesehen. Die zuschaltbare Bremse wird aktiviert, wenn das gelenkte Rad eine vorbestimmte Maximalposition erreicht hat. Die zuschaltbare Bremse wirkt für einen Benutzer wie ein Anschlag des Lenkwinkelgebers. Zweckmäßigerweise wird die zuschaltbare Bremse gelöst, wenn eine Betätigung des Lenkwinkelgebers erfolgt, die das gelenkte Rad von der Maximalposition fortlenkt. Für eine zuschaltbare Bremse ist die absolute Zuordnung von Lenkrad zu dem gelenkten Rad nicht entscheidend, sondern vielmehr die korrekte Zuordnung von Endabschlag des gelenkten Rades zu dem frei zuschaltbaren elektrischen Anschlag des Lenkrads. Wenn das gelenkte Rad die momentane Maximalposition erreicht hat, wird das Lenkrad angehalten bzw. abgebremst. Wird das Rad um einen kleinen Winkel zurückgedreht, löst sich die Bremse wieder. Die Bremse im Lenkrad wird bei Erreichen des Anschlags stark bestromt und nach kurzer Zeit nachgelassen, damit das Zurückdrehen einfacher möglich ist.

Zweckmäßigerweise wird die Ausrichtphase mit jedem Einschalten des Flurförderzeugs gestartet und durchgeführt. Auch kann vorgesehen sein, daß mit Abschluß der Ausrichtphase geprüft wird, ob die erfaßten Werte von Istwertsensor und Sollwertsensor für das vorbestimmte Übersetzungsverhältnis übereinstimmen. Ist der Lenkwinkelgeber in einer definierten Winkelstellung, so legt das Übersetzungsverhältnis fest, welche Winkelstellung das gelenkte Rad in seinem Segment besitzt.

In der Lenkwinkelsteuerung sind bevorzugt die Werte des Segments und ein Verdrehwinkel gegenüber der Segmentgrenze abgelegt.

Die erfindungsgemäße Aufgabe wird ebenfalls durch ein Flurförderzeug mit den Merkmalen gemäß Anspruch 8 gelöst.

Das erfindungsgemäße Flurförderzeug besitzt eine elektrische Lenkung, einen Lenkwinkelgeber und mindestens ein gelenktes Rad. Das Flurförderzeug weist einen Sollwertsensor, einen Istwertsensor und eine Lenksteuerung auf. Der Sollwertsensor erfaßt die Stellung des Lenkwinkelgebers, während der Istwertsensor die Lenkwinkelausrichtung des gelenkten Rades erfaßt. In der Lenksteuerung ist ein Übersetzungsverhältnis abgelegt, das die Übersetzung zwischen einer Winkeländerung des Lenkwinkelgebers und eine Änderung der Ausrichtung des gelenkten Rades festlegt. Ferner ist der von dem gelenkten Rad überstreichbare Winkelbereich in Segmente eingeteilt, wobei ein Winkelsegment bei einem vorgegebenen Übersetzungsverhältnis einer Volldrehung des Lenkwinkelgebers entspricht. Die Lenksteuerung weist einen Betriebsmodus zur Ausrichtung des gelenktes Rades auf, in dem für die Ausgangslage der vom Istwinkelsensor erfaßten Ausrichtung des gelenkten Rades ein Segment und ein Winkel innerhalb des Segmentes bestimmt wird. Das gelenkte Rad wird innerhalb des Segments in eine Winkellage ausgerichtet, die der Ausgangslage des Lenkwinkelgebers entspricht. Die erfindungsgemäße Lenksteuerung vermeidet somit eine Drehung des gelenkten Rades über die Segmentgrenzen hinaus und verkürzt damit die für die Ausrichtung der Lenkung erforderliche Zeitspanne. Darüber hinaus ist der insgesamt für das gelenkte Rad zurückgelegte Lenkwinkel deutlich verkürzt.

In einer vorbezugten Weiterführung weist der Lenkwinkelgeber eine Referenzstellung auf, der eine vorbestimmte Winkelausrichtung des gelenkten Rades in einem der Segmente zugeordnet ist. Bei der erfindungsgemäßen Lenksteuerung wird das gelenkte Rad aus seiner Ausgangsstellung nicht unbedingt in eine der Referenzstellung zugeordnete Ausrichtung gedreht, wenn der Lenkwinkelgeber sich in seiner Referenzposition befindet. Ursache hierfür ist, daß das gelenkte Rad nur innerhalb seines Segments ausgerichtet wird.

In einer zweckmäßigen Weiterführung weist der Lenkwinkelgeber eine zuschaltbare Bremse auf. Die Bremse für den Lenkwinkelgeber wird zugeschaltet, wenn das gelenkte Rad eine vorbestimmte Maximalposition erreicht hat. Die zuschaltbare Bremse stellt für den Benutzer einen elektrischen Anschlag für den Lenkwinkelgeber dar. Der Anschlag zeigt dem Benutzer an, daß das gelenkte Rad seine Maximalposition erreicht hat. Bevorzugt wird die zugeschaltete Bremse gelöst, wenn eine Bestätigung des Lenkwinkelgebers erfolgt, die das gelenkte Rad von der Maximalposition fortbewegt. Es handelt sich um einen einseitigen Anschlag, der ein Weiterdrehen sperrt.

Bevorzugt sind in der Lenksteuerung des erfindungsgemäßen Flurförderzeugs jeweils die aktuellen Werte für das Segment abgelegt.

Die erfindungsgemäße Vorrichtung wird nachfolgend anhand eines Ausführungsbeispiels näher erläutert. Es zeigt:
- Fig. 1: den schematischen Aufbau einer Lenkung für ein Flurförderzeug mit zwei gelenkten Rädern,
- Fig. 2: den schematischen Aufbau einer Lenkung für ein Flurförderzeug mit einem gelenkten Rad,
- Fign. 3 und 4: schematisch die Darstellung des Winkels des Lenkwinkelgebers sowie die Ausrichtung des gelenktes Rades innerhalb der Segmente.

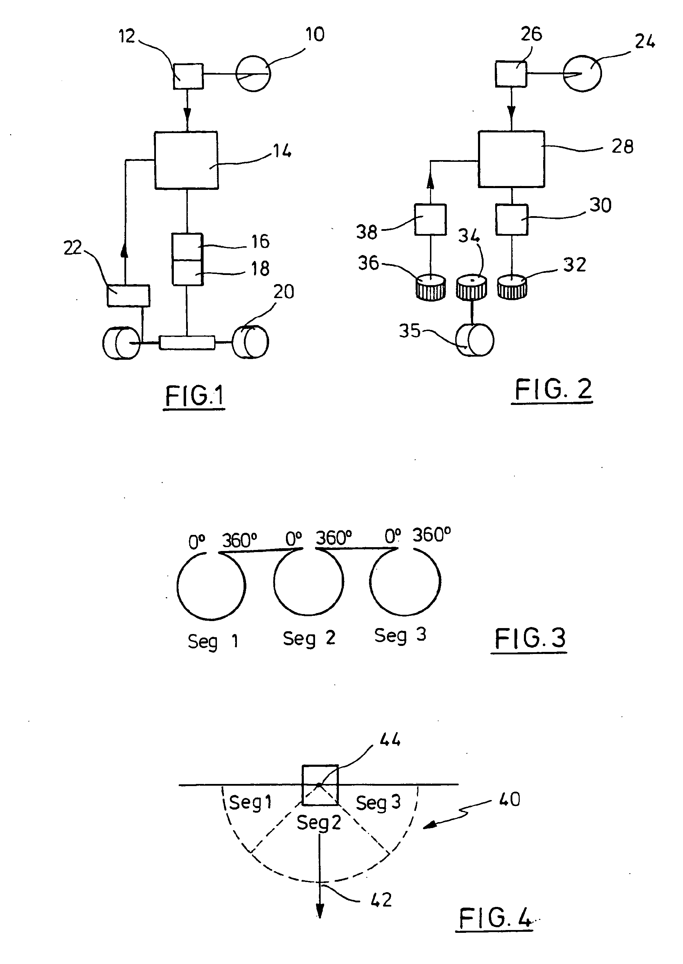

Fig. 1 zeigt in einer schematischen Ansicht ein Lenkrad 10 dessen Winkelstellung von einem Sollwertsensor 12 erfaßt wird. Der Sollwertsensor 12 erfaßt dabei eine Winkelstellung von 0 bis 360° für das Lenkrad; nach einer Volldrehung des Lenkrades zeigt der Sollwertsensor wieder den Winkel an, der einer Drehung ohne Vollwinkel entspricht. Der Wert des Sollwertsensors liegt an einer Lenksteuerung 14 an. Die Lenksteuerung 14 steuert einen Lenkmotor 16 an, der über eine Hydraulikpumpe 18 die gelenkten Räder 20 des Flurförderzeugs stellt. Die Ausrichtung der gelenkten Räder wird von einem Istwertsensor 22 erfaßt, der den gemessenen Istwert an die Lenksteuerung 14 zurückliefert.

Fig. 2 zeigt ebenfalls in einer schematischen Ansicht eine elektrische Lenkung für ein Flurförderzeug mit nur einem gelenkten Rad. Die Stellung des Lenkrads 24 wird von einem Sollwertsensor 26 erfaßt. Wie auch bei der elektrischen Lenkung gemäß Fig. 1 erfaßt der Sollwertsensor 24 die Stellung des gelenkten Rades in einem Winkelbereich von 0° bis 360°. Der vom Sollwertsensor erfaßte Wert liegt an einer Lenksteuerung 28 als ein Eingangssignal an. Die Lenksteuerung 28 steuert einen Lenkmotor 30 an, der über ein Ritzel 32 den Teller einer drehbar gelagerten Radhalterung 34 stellt. An der Radhalterung 34 wird beispielsweise mechanisch über ein Ritzel 36 die aktuelle Ausrichtung des Rades 35 von einem Istwertsensor 38 erfaßt. Der erfaßte Istwert wird an die Lenksteuerung 28 zurückgemeldet.

Üblicherweise besitzen Flurförderzeuge ein Übersetzungsverhältnis derart, daß mehrere Vollumdrehungen des Lenkrades notwendig sind, um den gesamten Winkelbereich des gelenkten Rades zu überstreichen. Figuren 3 und 4 zeigen die elektrische Lenkung am Beispiel eines Übersetzungsverhältnisses von 6:1, bei dem drei Vollumdrehungen des Lenkrades notwendig sind, um einen Winkelbereich 40 von 0° bis 180° zu überdecken. In der Lenkwinkelsteuerung ist also stets der aktuelle Wert des Sollwertsensors 12, 26 abgelegt, gleichzeitig mit dem aktuellen Wert des Segments. In dem in Fig. 4 dargestellten Beispiel bedeutet dies, daß bei der Verstellung des Lenkrades im ersten Segment der Winkel des Lenkrades im Bereich von 0 bis 360° die Ausrichtung des gelenkten Rades im ersten Segment verstellt. Wird das Lenkrad weiter in das zweite Segment gedreht, also eine Drehung von mehr als 360°, so befindet sich das Lenkrad in einem zweiten Segment und der Winkelbereich von 0 bis 360° bestimmt die Ausrichtung des Rades in diesem Segment.

Bei der erfindungsgemäßen Ausrichtung stellt der Istwertsensor 22, 38 fest, welche Ausrichtung das gelenkte Rad einnimmt. In dem in Fig. 4 dargestellten Beispiel ist der Winkel 42 beispielsweise ein Winkel im zweiten Segment. Daraufhin wird in der Lenksteuerung als aktuelles Segment das zweite Segment gesetzt und die aktuelle Position des Lenkrades abgefragt. Daraufhin wird das gelenkte Rad 44 in eine Position verdreht, die der erfaßten Position des Lenkrades entspricht.

## Patentansprüche

1. Verfahren zur Ausrichtung eines Lenkwinkelgebers (10, 24) für eine elektrische Lenkung eines Flurförderzeugs, mit
- einem Sollwertsensor (12, 26), der die Stellung des Lenkwinkelgebers (10, 24) erfaßt,
- einem Istwertsensor (22, 38), der die Ausrichtung des gelenkten Rades (20, 35) erfaßt, und
- einer Lenksteuerung (14, 28), die ein Übersetzungsverhältnis zwischen Lenkwinkelgeber (10, 24) und gelenktem Rad (20, 35) festlegt sowie einen insgesamt von dem gelenkten Rad überstreichbaren Winkelbereich (40) des gelenkten Rades in Winkelsegmente einteilt, wobei ein Winkelsegment einer Volldrehung des Lenkwinkelgebers (10, 22) entspricht,
**dadurch gekennzeichnet, dass**
die Lenksteuerung einen Betriebsmodus zur Ausrichtung des gelenkten Rades aufweist, in dem der Ausgangslage des Istwinkels des gelenkten Rades (20, 35) ein Segmentwert und ein Winkelwert innerhalb des Winkelsegments zugeordnet wird, und das gelenkte Rad innerhalb des Winkelsegments in eine Winkelausrichtung gedreht wird, die der von dem Sollwertsensor erfaßten Stellung des Lenkwinkelgebers entspricht.

2. Verfahren nach Anspruch 1, **dadurch gekennzeichnet, daß** das Übersetzungsverhältnis derart bestimmt ist, daß der gesamte Winkelbereich (40) des gelenkten Rades in einer vorbestimmten Anzahl von Vollumdrehungen überstrichen werden kann.

3. Verfahren nach Anspruch 1 oder 2, **dadurch gekennzeichnet, daß** der Lenkwinkelgeber (10, 24) eine Referenzstellung aufweist, der eine vorbestimmte Winkelausrichtung des gelenkten Rades in einem der Winkelsegmente zugeordnet ist.

4. Verfahren nach einem der Ansprüche 1 bis 3, **dadurch gekennzeichnet, daß** die Ausrichtphase mit jedem Einschalten des Flurförderzeugs gestartet wird.

5. Verfahren nach einem der Ansprüche 1 bis 4, **dadurch gekennzeichnet, daß** eine zuschaltbare Bremse für den Lenkwinkelgeber vorgesehen ist, die zugeschaltet wird, wenn das gelenkte Rad eine vorbestimmte Maximalposition erreicht hat.

6. Verfahren nach Anspruch 5, **dadurch gekennzeichnet, daß** die zuschaltbare Bremse gelöst wird, wenn eine Betätigung des Lenkwinkelgebers erfolgt, die das gelenkte Rad von der Maximalposition fortlenkt.

7. Verfahren nach einem der Ansprüche 1 bis 6, **dadurch gekennzeichnet, daß** in der Lenkstellung der aktuelle Wert für das Winkelsegment hinterlegt ist.

8. Flurförderzeug mit einer elektrischen Lenkung, einem Lenkwinkelgeber (10, 24) und mindestens einem gelenkten Rad (20, 35), die folgendes aufweisen:
- einen Sollwertsensor (12, 26), der die Stellung des Lenkwinkelgebers (10, 24) erfaßt,
- einen Istwertsensor (22, 36), der die Ausrichtung des gelenktes Rades (20, 35) erfaßt, und
- eine Lenksteuerung (14, 28), die ein Übersetzungsverhältnis zwischen Lenkwinkelgeber (10, 24) und gelenktem Rad (20, 35) festlegt sowie den Winkelbereich (40) des gelenkten Rades (44) in Winkelsegmente einteilt, wobei ein Winkelsegment einer Volldrehung des Lenkwinkelgebers (10, 24) entspricht,
- die Lenksteuerung weist einen Betriebsmodus zur Ausrichtung des gelenktes Rades auf, in dem für die Ausgangslage des Istwinkels des gelenkten Rades (20, 35) ein Winkelsegment und ein Winkel innerhalb des Winkelsegments bestimmt wird und das gelenkte Rad innerhalb des Winkelsegments in eine Winkelausrichtung gedreht wird, die der von dem Sollwertsensor erfaßten Stellung des Lenkwinkelgebers entspricht.

9. Flurförderzeug nach Anspruch 8, **dadurch gekennzeichnet, daß** der Lenkwinkelgeber eine Referenzstellung aufweist, der eine vorbestimmte Winkelausrichtung des gelenkten Rades in einem der Winkelsegmente zugeordnet ist.

10. Flurförderzeug nach Anspruch 8 oder 9, **dadurch gekennzeichnet, daß** eine zuschaltbare Bremse für den Lenkwinkelgeber vorgesehen ist, die zugeschaltet wird, wenn das gelenkte Rad eine vorbestimmte Maximalposition erreicht hat.

11. Flurförderzeug nach Anspruch 8 bis 10, **dadurch gekennzeichnet, daß** eine zugeschaltete Bremse gelöst wird, wenn eine Betätigung des Lenkwinkelgebers erfolgt, die das gelenkte Rad von der Maximalposition fortbewegt.

12. Flurförderzeug nach einem der Ansprüche 8 bis 11, **dadurch gekennzeichnet, daß** in der Lenksteuerung der aktuelle Wert des Winkelsegments abgelegt ist.

## Claims

1. A method for adjusting a steering angle transmitter (10, 24) for an electrical steering of an industrial truck, with
a desired value sensor (12, 26), which captures the position of the steering angle transmitter (10, 24),
a real value sensor (22, 38) which captures the adjustment of the steered wheel (20, 35), and
a steering control (14, 28), which sets a transmission ratio between the steering angle transmitter (10, 24) and the steered wheel (20, 35) and subdivides an angle range (40) that can be covered in total by the steered wheel into angle segments, wherein one angle segment corresponds to one complete rotation of the steering angle transmitter (10, 22),
**characterised in that**
the steering control has an operation mode for the adjustment of the steered wheel in which a segment value and an angle value within the angle segment is associated to the starting position of the real angle of the steered wheel (20, 35), and the steered wheel is rotated into an angular adjustment within the angle segment that corresponds to the position of the steering angle transmitter which was captured by the steering angle transmitter.

2. A method according to claim 1, **characterised in that** the transmission ratio is set such that the entire angle range (40) of the steered wheel can be covered in a predetermined number of complete rotations.

3. A method according to claim 1 or 2, **characterised in that** the steering angle transmitter (10, 24) has a reference position to which a predetermined angle adjustment of the steered wheel in one of the angle segments is associated.

4. A method according to any one of claims 1 to 3, **characterised in that** the adjustment phase is started at every switch-on of the industrial truck.

5. A method according to any one of claims 1 to 4, **characterised in that** an intentionally connectable brake for the steering angle transmitter is provided, which is connected when the steered wheel has reached a predetermined maximum position.

6. A method according to claim 5, **characterised in that** the intentionally connectable brake is released when there is an actuation of the steering angle transmitter which steers the steered wheel away from the maximum position.

7. A method according to any one of claims 1 to 6, **characterised in that** the actual value for the angle segment is deposited in the steering position.

8. An industrial truck with an electrical steering, a steering angle transmitter (10, 24) and at least one steered wheel (20, 35) which feature the following:
a desired value sensor (12, 26), which captures the position of the steering angle transmitter (10, 24),
a real value sensor (22, 23) which captures the adjustment of the steered wheel (20, 35), and
a steering control (14, 28), which sets a transmission ratio between the steering angle transmitter (10, 24) and the steered wheel (20, 35) and subdivides the angle range (40) of the steered wheel into angle segments, wherein one angle segment corresponds to one complete rotation of the steering angle transmitter (10, 22),
the steering control has an operation mode for the adjustment of the steered wheel in which an angle segment and an angle within the angle segment is associated to the starting position of the real angle of the steered wheel (20, 35), and the steered wheel is rotated into an angular adjustment within the angle segment that corresponds to the position of the steering angle transmitter which was captured by the desired value sensor.

9. An industrial truck according to claim 8, **characterised in that** the steering angle transmitter has a reference position to which a predetermined angle adjustment of the steered wheel in one of the angle segments is associated.

10. An industrial truck according to claim 8 or 9, **characterised in that** an intentionally connectable brake for the steering angle transmitter is provided, which is connected when the steered wheel has reached a predetermined maximum position.

11. An industrial truck according to any one of claims 8 to 10, **characterised in that** an intentionally connectable brake is released when there is an actuation of the steering angle transmitter which steers the steered wheel away from the maximum position.

12. An industrial truck according to any one of claims 8 to 11, **characterised in that** the actual value for the angle segment is deposited in the steering position.

## Revendications

1. Procédé d'alignement d'un capteur d'angle de direction (10, 24) pour un système de direction électrique d'un chariot de manutention, avec
un senseur de valeur exigée (12, 26), qui enregistre la position du capteur d'angle de direction (10, 24),
un senseur de valeur effective (22, 38), qui enregistre l'alignement de la roue dirigée (20, 35), et
un système de commande de direction (14, 28), qui détermine un rapport de multiplication entre le capteur d'angle de direction (10, 24) et la roue dirigée (20, 35) et répartit en des segments angulaires une plage angulaire (40) qui peut être recouverte au total par la roue dirigée, un segment angulaire correspondant à une rotation complète du capteur d'angle de direction (10, 22),
**caractérisé en ce que**
le système de commande de direction a un mode d'opération pour l'alignement de la roue dirigée, dans lequel une valeur de segment et une valeur angulaire dans le segment angulaire est associé à la position de départ de l'angle effectif de la roue dirigée (20, 35), et la roue dirigée est tournée en un alignement angulaire dans le segment angulaire qui correspond à la position du capteur d'angle de direction qui était enregistrée par le senseur de valeur exigée.

2. Procédé selon la revendication 1, **caractérisé en ce que** le rapport de multiplication est déterminé de façon que la plage angulaire (40) entière de la roue dirigée peut être recouverte dans un nombre prédéterminé de rotations complètes.

3. Procédé selon la revendication 1 ou 2, **caractérisé en ce que** le capteur d'angle de direction (10, 24) présente une position de référence à laquelle un alignement angulaire de la roue dirigée dans un des segments angulaires est associé.

4. Procédé selon l'une quelconque des revendications 1 à 3, **caractérisé en ce que** la phase d'alignement est mise en marche dans chaque activation du chariot de manutention.

5. Procédé selon l'une quelconque des revendications 1 à 4, **caractérisé en ce que** un frein enclenchable est pourvu pour le capteur d'angle de direction, qui est enclenché quand la roue dirigée est arrivée dans une position maximale prédéterminée.

6. Procédé selon la revendication 5, **caractérisé en ce que** un frein enclenchable est desserré quand il y a une actuation du capteur d'angle de direction qui dirige la roue dirigée au dehors de la position maximale.

7. Procédé selon l'une quelconque des revendications 1 à 6, **caractérisé en ce que** la valeur courante pour le segment angulaire est déposée dans la position de direction.

8. Chariot de manutention avec un système de direction électrique, un capteur d'angle de direction (10, 24) et au moins une roue dirigée (20, 35) qui présentent ce qui suit :
un senseur de valeur exigée (12, 26), qui enregistre la position du capteur d'angle de direction (10, 24),
un senseur de valeur effective (22, 38), qui enregistre l'alignement de la roue dirigée (20, 35), et
un système de commande de direction (14, 28), qui détermine un rapport de multiplication entre le capteur d'angle de direction (10, 24) et la roue dirigée (20, 35) et répartit la plage angulaire (40) de la roue dirigée (44) en des segments angulaires, un segment angulaire correspondant à une rotation complète du capteur d'angle de direction (10, 22),
le système de commande de direction présente un mode d'opération pour l'alignement de la roue dirigée, dans lequel un segment angulaire et un angle dans le segment angulaire est déterminé pour la position de départ de l'angle effectif de la roue dirigée (20, 35), et la roue dirigée est tournée en un alignement angulaire dans le segment angulaire qui correspond à la position du capteur d'angle de direction qui était enregistrée par le senseur de valeur exigée.

9. Chariot de manutention selon la revendication 8, **caractérisé en ce que** le capteur d'angle de direction (10, 24) présente une position de référence à laquelle un alignement angulaire de la roue dirigée dans un des segments angulaires est associé.

10. Chariot de manutention selon la revendication 8 ou 9, **caractérisé en ce que** un frein enclenchable est pourvu pour le capteur d'angle de direction, qui est enclenché quand la roue dirigée est arrivée dans une position maximale prédéterminée.

11. Chariot de manutention selon l'une quelconque des revendications 8 à 10, **caractérisé en ce que** un frein enclenchable est desserré quand il y a une actuation du capteur d'angle de direction qui dirige la roue dirigée en dehors de la position maximale.

12. Chariot de manutention selon l'une quelconque des revendications 8 à 11, **caractérisé en ce que** la valeur effective pour le segment angulaire est déposée dans la position de direction.
